# FASCICULE DE BREVET EUROPEEN

(11) **EP 0 321 323 B1**
(45) Date de publication et mention de la délivrance du brevet: **16.06.1993**
(21) Numéro de dépôt: 88403106.3
(22) Date de dépôt: 07.12.1988
(51) Int. Cl.: A21D 13/08, B65D 75/38, B65D 85/36

(54) **Procédé et dispositif de fabrication d'une tarte**
Verfahren und Einrichtung zur Herstellung einer Torte
Process and apparatus for making a tart

(30) Priorité: 14.12.1987 FR 8717404
(43) Date de publication de la demande: 21.06.1989
(73) Titulaire: GRINGOIRE-BROSSARD S.A., F-45300 Pithiviers (FR)
(72) Inventeur: Lucas, André, F-45300 Pithiviers (FR)
(74) Mandataire: Rodhain, Claude

(56) Documents cités:
- DE-B- 1 142 566
- FR-A- 1 310 332
- FR-A- 1 315 472
- FR-A- 1 315 958
- FR-E- 83 877
- US-A- 3 185 576
- US-A- 3 352 688
- US-A- 3 441 418

## Description

La présente invention a pour objet un procédé de fabrication d'une tarte garnie de fruits, légumes, produits carné, mousses ou de tout autre produit alimentaire à longue durée de conservation.

Il est déjà connu de fabriquer des tartes garnies aux fruits en déposant dans un moule, successivement, un fond de tarte cuite sur lequel sont déposés des fruits, auxquels sont ajoutés un gélifiant, un adjuvant de démoulage, du sucre etc ...

Est connu également sous le brevet de dépôt n^{o} 87/001762 de fabriquer une tarte renversée aux fruits, la tarte, située dans un moule, supporte un second moule pour la garniture, l'ensemble étant cuit, stérilisé et emballé. Un tel produit a une durée de conservation de plusieurs mois.

Le document DE-A-1 142 566 décrit un procédé selon lequel on place la garniture d'une tarte dans un emballage étanche, puis on dispose cet emballage sur un fond de tarte. L'ensemble est alors placé dans un emballage étanche.

Le document US-A-3 441 418 décrit un procédé de fabrication de feuilleté à la crème selon lequel les feuilletés sont préparés, emballés et stockés séparément de la crème, puis celle-ci est déposée dans chaque feuilleté sorti de son emballage. L'ensemble formant un feuilleté à la crème est lors chauffé et emballé définitivement.

Le document FR-A-1 315 472 décrit un produit alimentaire constitué d'un fond de tarte sur lequel est placé un sachet contenant des ingrédients de garniture. Le fond de tarte est disposé sur un support étanche et ne subit aucune cuisson, ni stérilisation avant d'être placé sur ce support.

L'invention réalisée propose un nouveau procédé de fabrication présentant de nombreux avantages.

A cet effet, conformément à l'invention, le procédé de fabrication d'une tarte constitué d'un fond de tarte et d'une garniture à l'état de gel, est caractérisé en ce que la tarte et la garniture sont cuites emballées une première fois et stérilisées séparément, puis sont emballées de nouveau ensemble.

Ainsi, l'invention permet d'étendre le champ d'application à d'autres garnitures que des fruits, c'est-à-dire des légumes, des produits carnés, des mousses. La mise en oeuvre est beaucoup plus facile. La garniture et la pâte sont cuites séparément d'où un avantage au point de vue de la qualité et de la conservation. Elles sont également stérilisées séparément d'où une possibilité d'adaptation facile des paramètres en fonction de la pâte et de la garniture. Enfin, la garniture se loge parfaitement dans la pâte.

Une fois cuites, stérilisées et emballées séparément, l'ensemble tarte et gel sont emballés ensemble, pour la vente dans le commerce.

La garniture peut être composée de fruits mais aussi de légumes, de produits carnés, de mousses ou de tout autre produit alimentaire. Il ne s'agit donc pas d'une classique tarte aux fruits seulement, mais également d'une tarte avec une garniture de légumes, de produits carnés, de mousses ou de tout autre produit alimentaire, permettant ainsi un vaste champ d'application.

A la garniture sont ajoutés un adjuvant de démoulage, pour un bon démoulage, et un agent gélifiant, donnant à la garniture son aspect de gel.

Lorsque la garniture est composée de fruits, on peut lui ajouter de l'acide citrique et du citrate de sodium, ceci afin de permettre une conservation prolongée de la garniture à base de fruits et d'éviter l'altération des fruits.

Pour obtenir une tarte dans laquelle loge parfaitement la garniture, la forme de la garniture correspond à un creux formé.

Le dispositif pour la mise en oeuvre du procédé prévoit que deux moules sont nécessaires pour fabriquer la pâte et la garniture : un moule à pâte et un moule à garniture, le moule à garniture présentant un diamètre supérieur correspondant au diamètre inférieur du moule à pâte.

La matière du moule à garniture est de l'aluminium, du plastique, du carton ou une combinaison de ces différents matériaux.

Le moule à pâte peut avoir son diamètre inférieur surélevé par rapport au fond du bord.

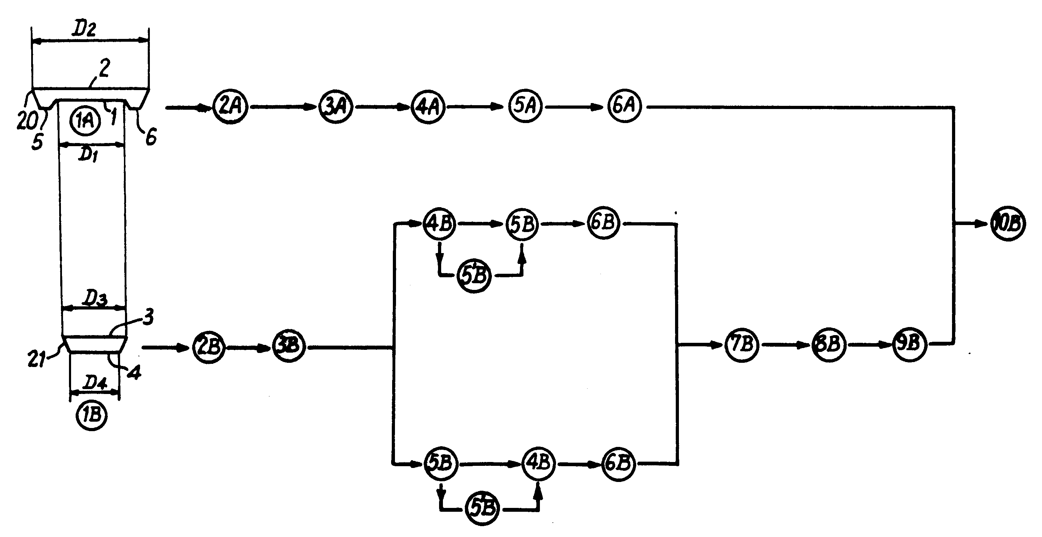

D'autres caractéristiques apparaîtront à la lecture de la description suivante, aidée par une figure unique représentant les étapes de la fabrication selon le procédé de l'invention pour chaque élément c'est-à-dire la pâte dans un premier temps, la garniture, dans un deuxième temps.

L'étape 1A consiste en la présentation du moule à pâte 20 dans la chaîne de fabrication. Le diamètre D₁ de la partie inférieure 1 est inférieur au diamètre D₂ de la partie supérieure 2. La variation de diamètre s'opère dans un plan horizontal sur une faible hauteur, présentant une forme tronconique favorable à un bon démoulage, un bord 15 étant créé. Le moule à parte peut avoir le diamètre D₁ de la partie inférieure 1 surélevée par rapport au fond 5 du bord 6.

L'étape 2A consiste en la projection d'un agent de démoulage afin de faciliter le démoulage de la pâte du moule.

L'étape 3A consiste en la cuisson de la pâte dans le moule. Elle dure de 15 à 20 mn, à une température comprise entre 200 et 220°C. La pâte peut présenter différentes formules, comme pâte aux oeufs, pâte brisée, pâte feuilletée.

L'étape 4A consiste au démoulage de la pâte du moule.

L'étape 5A consiste en l'emballage de la pâte dans un emballage étanche à l'eau, aux gaz (oxygène O₂,CO₂) et présentant une résistance mécanique afin de la protéger contre des chocs éventuels.

L'étape 6A consiste en la stérilisation de la pâte, par exemple par infra-rouge.

L'étape 1B consiste en la présentation du moule à garniture 21 dans la chaîne de fabrication.Le diamètre D₃ de la partie supérieure 3 du moule à garniture 21 est supérieur au diamètre D₄ de la partie inférieure 4; le diamètre D₃ correspond au diamètre D₁ du moule à pâte 20 permettant ainsi une logeabilité parfaite de la garniture dans la pâte.

Les étapes 2B et 3B consistent en l'addition du système démoulant qui se fait en deux déposes.

L'étape 2B consiste en la première dépose du système démoulant,composé d'un émulsifiant alimentaire, d'acide citrique et d'eau.

L'étape 3B consiste en la deuxième dépose du système démoulant c'est-à-dire l'addition d'alginate, de sucre, d'eau et de tricalcium tricitrate.

L'étape 4B consiste en l'addition de gélifiant constitué de pectine, d'amidon, etc.... et de sel de calcium (pour durcir le gel), ces ingrédients étant dilués au préalable dans du sucre ou tout autre ingrédient permettant une bonne dispersion.

L'étape 5B consiste en l'addition de la garniture dans le moule. Si la garniture est congelée, la décongélation est obtenue par passage dans un tunnel avec chauffage par hyperfréquences (étape 5′B).

Les étapes 4B et 5B peuvent être inversées. Cette inversion ne pose aucun préjudice au dispositif de fabrication et à la qualité de la garniture.

L'étape 6B est facultative. Elle consiste en l'addition éventuelle d'aromes, d'épices.

L'étape 7B consiste en la cuisson de la garniture. La garniture est cuite dans un moule d'aluminium, de matière plastique, ou de carton, ou dans un moule d'une combinaison de deux de ces matériaux. Le moule doit résister à la corrosion et être inerte vis-à-vis de la garniture, ceci afin de garantir la qualité de la garniture. Il doit aussi résister à des températures de 220°C, température de la cuisson.

Le moule utilisé a été formé par emboutissage ou thermoformage ou injection ou de tout autre mode de production de moule.

L'étape 8B consiste en la couverture du moule avec un opercule pelable.

L'étape 9B consiste en la stérilisation ou la pasteurisation effectuées dans des autoclaves à contre-pression ou des appareillages similaires. Pour des produits à base de viande,la stérilisation dure 45 mn à une température maximale de 140°C. Pour les légumes, elle dure 10 mn à une température de 130°C.

La valeur stérilisatrice varie de 15 à 25 pour les légumes et de 5 à 7 pour les viandes.

Pour les fruits, on utilise la pasteurisation qui dure 8 mn à 90°C.

Toutes ces valeurs sont données à titre d'exemple.

Les opérations de stérilisation ou de pasteurisation, et de cuisson peuvent être combinées, mais aussi être indépendantes, ceci n'altérant pas la qualité du produit.

L'étape 10 consiste en l'emballage de l'ensemble pâte et garniture présentant l'avantage de proposer à la ménagère un produit complet produit sous forme d'un lot,c'est-à-dire remontable et démontable.

Le consommateur aura l'avantage d'acheter un produit de qualité. Chaque partie, la pâte ou la garniture est cuite à la température adéquate.

Il aura la possibilité d'acheter des tartes autres qu'à des fruits. Il lui sera très facile de démouler cette tarte, la garniture se logeant parfaitement sur la pâte; le centrage est parfait.

La présente invention n'est pas limitée aux exemples de réalisation qui viennent d'être décrits, elle est au contraire susceptible de modifications et de variantes qui apparaîtront à l'homme de l'art.

## Revendications

1. Procédé de fabrication d'une tarte constituée d'un fond de tarte et d'une garniture à l'état de gel, caractérisé en ce que la pâte et la garniture sont cuites séparément, emballées une première fois séparément et stérilisées séparément, puis sont emballées de nouveau ensemble.

2. Procédé de fabrication selon la revendication 1, caractérisé en ce que la garniture est composée de fruits, légumes, produits carnés, mousses ou tout autre produit alimentaire, à laquelle sont ajoutés un adjuvant de démoulage et un mélange de gélifiant.

3. Procédé de fabrication selon la revendication 2, caractérisé en ce qu'il est ajouté, avant addition de la garniture et/ou du mélange gélifiant, un système démoulant, en deux temps :
- addition, dans un premier temps, d'un émulsifiant alimentaire, d'acide citrique et d'eau;
- addition, dans un second temps, d'alginate, de sucre, d'eau et de tricalcium tricitrate.

4. Procédé de fabrication selon la revendication 1, caractérisé en ce que la garniture comporte une forme qui correspond exactement à un creux formé.

5. Dispositif pour la mise en oeuvre du procédé selon l'une quelconque des revendications 1 à 4, caractérisé en ce qu'il est constitué de deux moules, le moule à pâte (20) dont le diamètre inférieur (1) est supérieur au diamètre supérieur (2), le moule à garniture (21) dont le diamètre supérieur (3) est supérieur au diamètre inférieur (4) tel que le diamètre supérieur (3) du moule à garniture (21) corresponde au diamètre inférieur (1) du moule à pâte (20).

6. Dispositif selon la revendication 5, caractérisé en ce que le moule à garniture (21) est en aluminium, matière plastique, carton, ou en une combinaison de ces différents matériaux.

7. Dispositif selon la revendication 5, caractérisé en ce que le moule à pâte (20) a son diamètre inférieur (1) surélevé par rapport au fond (5) du bord (6).

## Claims

1. A process for making a tart comprising a tart bottom and a gel-state garnishing, characterized in that the paste and garnishing thereof are separately cooked, separately packed a first time and separately sterilized, then packed together again.

2. The making process as recited in claim 1, characterized in that said garnishing comprises fruits, vegetables, meat-base products, mousses or any other food products, to which are added a turning-out additive and a gelling mixture.

3. The making process as recited in claim 2, characterized in that before said garnishing and/or gelling mixture is added, a turning-out system is added, a turning-out system is added in the two steps of :
- adding, in a first time, a food emulsifying agent, citric acid and water,
- adding, in a second time, alginate, sugar, water and tricalcium tricitrate.

4. The making process as recited in claim 1, characterized in that said garnishing shows a shape which exactly matches a formed hollow.

5. A device for embodying the process as recited in any claim 1-4, characterized in that in that it includes two moulds, i.e. a paste mould (20), the lower diameter (1) of which is larger that the upper diameter (2), a garnishing mould (21), the upper diameter (3) of which is larger than the lower diameter (4) in such a way that the upper diameter (3) of said garnishing mould (21) matches the lower diameter (1) of said paste mould (20).

6. The device as recited in claim 5, characterized in that said garnishing mould (21) is made of aluminium, plastics, carboard, or a combination of the above different materials.

7. The device as recited in claims 5, characterized in that the lower diameter (1) of said paste mould (20) is raised with reference to the bottom (5) of edge (6) thereof.

## Patentansprüche

1. Verfahren zur Herstellung einer Torte, bestehend aus einem Tortenboden und einer Gelee-Garnitur, dadurch gekennzeichnet, daß der Teig und die Garnitur getrennt gebacken, ein erstes Mal getrennt verpackt und getrennt sterilisiert und dann erneut zusammen verpackt werden.

2. Verfahren nach Anspruch 1, dadurch gekennzeichnet, daß die Garnitur aus Früchten, Gemüse, Fleischprodukten, Pasten oder irgendeinem anderen Lebensmittelprodukt, dem ein Entformungsmittel und eine Geliermittelmischung zugesetzt wird, besteht.

3. Verfahren nach Anspruch 2, dadurch gekennzeichnet, daß vor dem Zugeben der Garnitur und/oder der Getiermittelmischung ein Entformungssystem in zwei Zeiten zugefügt wird, nämlich
- zu einer ersten Zeit der Zusatz eines Lebensmittel-Emulgators, von Zitronensäure und Wasser,
- zu einer zweiten Zeit der Zusatz von Alginat, Zucker, Wasser und Tricalzium-Tricitrat.

4. Verfahren nach Anspruch 1, dadurch gekennzeichnet, daß die Garnitur eine Form hat, die exakt einem gebildeten Hohlraum entspricht.

5. Vorrichtung zur Durchführung des Verfahrens nach einem der Ansprüche 1 bis 4, dadurch gekennzeichnet, daß sie aus zwei Formen besteht, der Pastenform (20), deren unterer Durchmesser (1) kleiner als der oberer Durchmesser (2) ist, und der Garniturform (21), deren oberer Durchmesser (3) derart größer als der untere Durchmesser (4) ist, daß der obere Durchmesser (3) der Garniturform (21) dem unteren Durchmesser (1) der Pastenform (20) entspricht.

6. Vorrichtung nach Anspruch 5, dadurch gekennzeichnet, daß die Garniturform (21) aus Aluminium, Kunststoff, Karton oder aus einer Kombination dieser Materialien besteht.

7. Vorrichtung nach Anspruch 5, dadurch gekennzeichnet, daß der untere Durchmesser (1) der Pastenform (20) gegenüber dem Boden (5) des Randes (6) erhöht ist.
